# EUROPÄISCHE PATENTSCHRIFT

(11) **EP 2 470 858 B1**
(45) Veröffentlichungstag und Bekanntmachung des Hinweises auf die Patenterteilung: **29.05.2013**
(21) Anmeldenummer: 10750045.6
(22) Anmeldetag: 23.08.2010
(51) Int. Cl.: G01B 11/25, G01B 11/30, G01N 15/08

(54) **VERFAHREN UND VORRICHTUNG ZUR QUALITÄTSPRÜFUNG EINES UMGEFORMTEN THERMOPLASTISCHEN FASERVERSTÄRKTEN KUNSTSTOFFBAUTEILS**
METHOD AND DEVICE FOR THE QUALITY INSPECTION OF A FORMED THERMOPLASTIC FIBER-REINFORCED PLASTIC COMPONENT
PROCÉDÉ ET DISPOSITIF DE CONTRÔLE DE QUALITÉ D'UN ÉLÉMENT EN MATIÈRE THERMOPLASTIQUE RENFORCÉ PAR FIBRES, FAÇONNÉ

(30) Priorität: 27.08.2009 DE 102009038746; 27.08.2009 US 237384 P
(43) Veröffentlichungstag der Anmeldung: 04.07.2012
(73) Patentinhaber: Airbus Operations GmbH, 21129 Hamburg (DE)
(72) Erfinder: VON KOPYLOW, Christoph, 27412 Wilstedt (DE); EDELMANN, Klaus, 28199 Bremen (DE); FRESE, Tanja, 27367 Horstedt (DE); BRANDT, Carsten, 28329 Bremen (DE); KETHLER, Jens, 28844 Weyhe (DE)
(74) Vertreter: Maiwald Patentanwalts GmbH
(86) Internationale Anmeldenummer: PCT/EP2010/005156
(87) Internationale Veröffentlichungsnummer: WO 2011/023353

(56) Entgegenhaltungen:
- WO-A2-02/061368
- US-A1- 2007 107 520

## Beschreibung

Die Erfindung betrifft ein Verfahren sowie eine Vorrichtung zur Qualitätsprüfung eines umgeformten thermoplastischen faserverstärkten Kunststoffbauteils, das mit einer Sensoreinheit mit nachgeschalteter elektronischer Auswerteeinheit zur Analyse des sensortechnisch erfassten Messergebnisses geprüft wird.

Das Einsatzgebiet der Erfindung erstreckt sich vornehmlich auf die Flugzeugtechnik. Faserverstärkte Kunststoffbauteile kommen zur Bildung von Gehäusestrukturen, Wandstrukturen und dergleichen zum Einsatz. Vornehmlich sind hier interessierende Kunststoffbauteile mit Kohlefasern verstärkt und bilden sogenannte CFK-Bauteile. Faserverstärkte Kunststoffbauteile mit thermoplastischer Harzmatrix liegen gewöhnlich als Halbzeug in Plattenform vor und werden durch thermoplastisches Umformen in die Sollform gebracht. Zum thermoplastischen Umformen dient dabei eine Presse, die den erforderlichen Umformdruck liefert und deren beheiztes Umformgesenk die Endform des Kunststoffbauteils wiederspiegelt. In Folge des thermoplastischen Umformens kann es durch Temperaturunterschiede zu unerwünschten Materialtrennungen oder einer erhöhten inneren Porosität des umgeformten Kunststoffbauteils kommen, so dass eine diesbezügliche Qualitätsprüfung nach dem Umformvorgang durchzuführen ist. Dies hat durch eine zerstörungsfreie Werkstoffprüfung zu erfolgen.

Grundlage dieser Problematik ist der Wärmefluss im Kunststoffbauteil während des Umformvorgangs. Vor diesem Vorgang wird sowohl das Kunststoffbauteil als auch das Umformwerkzeug erwärmt. Ist das Umformwerkzeug nicht genügend erwärmt, kommt es während des Umformvorganges zum Wärmefluss vom Bauteil ins Werkzeug. Hierbei kühlt sich die Oberfläche des Kunststoffbauteils als erstes ab, wogegen das Innere des Kunststoffbauteils zuletzt abkühlt. Ist die Temperatur des Kunststoffbauteils während des Umformvorgangs zu gering, bildet sich die besagte Porosität.

Aus der DE 102 58 336 B3 geht ein Verfahren und eine Vorrichtung zur zerstörungsfreien Werkstoffprüfung hervor, die sich auch für CFK-Bauteile eignet. Das zu überprüfende Kunststoffbauteil wird hier mittels einer Anordnung von Ultraschallköpfen durchschallt. Die Ultraschallköpfe werden auf einer vorgegebenen Bahn relativ zu dem Kunststoffbauteil bewegt und mittels eines Flüssigkeitsstrahls akustisch an das Werkstück angekoppelt. Dabei ist vorgesehen, dass die Verstärkung der Prüfköpfe über einen weiten Dynamikbereich verstellbar ist, wobei sowohl ein monolithischer Bereich als auch ein Sandwich-Bereich eines CFK-Bauteils hinsichtlich Materialqualität prüfbar ist.

Allerdings ist eine solche Ultraschallprüfung technisch recht aufwendig, da zur Sicherstellung der akustischen Ankopplung der Flüssigkeitsstrahl erzeugt, aufrecht erhalten und abgeführt werden muss. Weiterhin ist eine Ultraschallprüfung messprinzipsbedingt recht zeitaufwendig.

Aus der DE 41 06 334 C1 geht ein weiteres Verfahren zur Qualitätsprüfung faserverstärkter Kunststoffbauteile per Ultraschallprüfung hervor. Es wird hier mit einer bildhaften Aufzeichnung von Echoimpulsen gearbeitet. An Messpunkten, an denen die Amplitude des Echos eines dem Kunststoffbauteil durchlaufenden Impulses unterhalb eines vorgegebenen Wertes liegt, wird die Amplitude eines eventuellen Fehlerechos aufgezeichnet. Zwar ist mit dieser Methode eine vollflächige Prüfung des Kunststoffbauteils mit einem einzigen Bild, und damit in einem einzigen Prüfschritt darstellbar, jedoch unterliegt dieses Verfahren ebenfalls den vorstehend erläuterten der Ultraschallprüfung anhaftenden Nachteilen.

Aus der US 2007/0107520 geht ein weiteres Ultraschallverfahren zur Qualitätsprüfung faserverstärkter Kunststoffbauteile hervor.

### HINTERGRUND DER ERFINDUNG

Es ist daher die Aufgabe der vorliegenden Erfindung ein Verfahren sowie eine Vorrichtung zur Qualitätsprüfung faserverstärkter Kunststoffbauteile mit thermoplastischer Matrix zu schaffen, welche mit einfachen technischen Mitteln ein zeiteffizientes und genaues Prüfen der Kunststoffbauteile auf innere Qualität gewährleistet.

Die Aufgabe wird ausgehend von einem Verfahren gemäß dem Oberbegriff von Anspruch 1 in Verbindung mit dessen kennzeichnenden Merkmalen gelöst. Vorrichtungstechnisch wird die Aufgabe durch Anspruch 6 gelöst. Die jeweils rückbezogenen abhängigen Ansprüche geben vorteilhafte Weiterbildungen der Erfindung wieder.

Die Erfindung schließt die verfahrenstechnische Lehre ein, dass durch eine optische Sensoreinheit die Oberflächenrauigkeit des Kunststoffbauteils nach dem Umformen eingemessen wird, welche durch eine nachgeschaltete Auswerteeinheit anhand eines Vergleichs mit einem hinterlegten Referenzmuster derart analysiert wird, dass eine erhöhte Oberflächenrauigkeit als eine erhöhte innere Werkstoffporosität interpretiert wird.

Mit anderen Worten beruht die Erfindung darauf, anhand der Oberflächenrauigkeit ein umgeformtes thermoplastisches faserverstärktes Kunststoffbauteil dahingehend zu analysieren, ob die innere Qualität des Kunststoffbauteils sich durch den Umformvorgang verschlechtert hat. Damit wird davon abgegangen, zur Beurteilung der inneren Qualität auch die innere Qualität direkt zu untersuchen. Erfindungsgemäß erfolgt die Beurteilung der inneren Qualität vielmehr aufgrund der äußeren Erscheinung des Kunststoffbauteils. Da die optische Erfassung und Auswertung der Oberfläche eines Bauteils per Mustervergleich datenverarbeitungstechnisch für die gesamte erfasste Oberfläche sehr schnell durchzuführen ist, lässt sich eine hohe Zeitersparnis für die Qualitätsprüfung erzielen. Zudem ist keine besondere Ankopplung zwischen Sensoreinheit und zu prüfendes Kunststoffbauteil erforderlich, insbesondere braucht im Gegensatz zur Ultraschallprüfung keine Koppelflüssigkeit verwendet werden, so dass sich die erfindungsgemäße Lösung gerätetechnisch einfacher umsetzen lässt. Es kann auf Standardbauteile zur optischen Analyse zurückgegriffen werden. Durch die optische Analyse lässt sich auf eine schlechte innere Qualität durch eine sichtbar rauere Außenoberfläche als bei einem fehlerfreien Kunststoffbauteil schließen. Es wurde festgestellt, dass sich innenliegende Materialtrennungen und Porosität als vermehrte Rauigkeit an der Oberfläche des Kunststoffbauteils abzeichnen. Die Erfindung macht sich damit diese Korrelation zwischen Oberfläche und innerer Qualität zu nutzen.

Als besonders bevorzugtes Messprinzip zur Realisierung des vorstehend beschriebenen Verfahrens wird die optische Streifenreflektion (Reflektometrie) vorgeschlagen. Bei diesem optischen Messverfahren wird von einer Strahlungsquelle ein Streifenmuster mit geraden und parallel zueinander beabstandet angeordneten Leuchtstreifen erzeugt, das auf die Oberfläche des Kunststoffbauteils als Messobjekt fällt und von dieser reflektiert wird. Bedingt durch die Oberflächenrauheit sind die reflektierten Streifen deformiert. Die deformierten Streifen werden von einer Kamera erfasst und hinsichtlich der Oberflächenwinkel sowie Krümmung und dergleichen per Bildanalyse ausgewertet, um Rückschlüsse auf die Verteilung sowie den Grad der Oberflächenrauheit zu erzielen.

Für die erfindungsgegenständliche Anwendung dieses Messprinzips wird vorgeschlagen, dass die Sensoreinheit einen LCD-Monitor zur Erzeugung des besagten Streifenmusters umfasst. Unmittelbar daneben und entsprechend den optischen Achsen ausgerichtet sollte eine CCD-Kamera zur Aufnahme des von der Bauteiloberfläche reflektierten Streifenmusters angeordnet sein. Es können auch mehrere Sensoreinheiten vorgesehen werden, um das Kunststoffbauteil zeitgleich von mehreren Seiten her zu prüfen.

Gemäß einer bevorzugten Ausführungsform der erfindungsgemäßen Vorrichtung reicht allerdings eine einzige Sensoreinheit aus, welche ortsfest installiert ist, wogegen das zu prüfende Kunststoffbauteil mittels einer Handhabungseinrichtung flexibel gegenüber der Sensoreinheit positionierbar ist. Die Handhabungseinrichtung kann dabei ein entlang mehrerer Raumachsen bewegbarer Industrieroboter sein, der im Fertigungsprozess des Kunststoffbauteils sowieso zum Einlegen und zur Entnahme des Kunststoffbauteils in bzw. aus dem Umformwerkzeug der Presse vorhanden ist.

Mit einer solchen Vorrichtung lässt sich das Kunststoffbauteil derart gegenüber der optischen Sensoreinheit positionieren, dass ein optisches Einmessen von mehreren Seiten erfolgen kann. Vorzugsweise werden alle Seiten und damit die gesamte Oberfläche des Kunststoffbauteils optisch eingemessen, um eine vollständige Qualitätsprüfung vorzunehmen. Es ist jedoch ausreichend, wenn nur diejenigen Seiten des Kunststoffbauteils optisch eingemessen werden, an denen sich durch eine erhöhte Oberflächenrauigkeit aller Erfahrung nach eine verminderte innere Qualität des Kunststoffbauteils abzeichnet. Durch diese Maßnahme kann die Prüfzeit weiter reduziert werden.

Gemäß einer anderen die Erfindung verbessernden Maßnahme wird vorgeschlagen, dass das hinterlegte Referenzmuster derart über die optische Sensoreinheit erzeugt wird, dass ein Musterbauteil mit normaler Oberflächenrauigkeit hiervon optisch eingemessen wird. Die so eingemessenen Daten werden als eine Art Bilddatei in eine Speichereinheit der Auswerteeinheit hinterlegt, die vorzugsweise in Form eines Rechners (PC) ausgebildet ist. Zur Durchführung einer eindeutigen Prüfung wird gemäß einer anderen die Erfindung verbessernden Maßnahme vorgeschlagen, einen Schwellenwert für die Oberflächenrauigkeit des Kunststoffbauteils festzulegen. Wird dieser Schwellenwert nach Durchführung des Vergleichs der eingemessenen Oberflächenrauigkeit mit dem hinterlegten Referenzmuster überschritten, so lässt sich im Zuge einer automatisierten Qualitätskontrolle eine Gut-Schlecht-Auswahl der zu prüfenden Kunststoffbauteile treffen. Hierdurch lässt sich ein eindeutiges und gleichmäßiges Prüfergebnis erzielen.

Die erfindungsgemäße Lösung bietet die Voraussetzung dafür, dass durch die optische Sensoreinheit lokale Änderungen der Oberflächenrauigkeit bezüglich der Gesamtoberfläche einer eingemessenen Seite des Kunststoffbauteils festgestellt werden können. Liegt lokal eine erhöhte Oberflächenrauigkeit vor, so kann auf lokal schlechte innere Qualität des Kunststoffbauteils rückgeschlossen werden.

### KURZE BESCHREIBUNG DER ZEICHNUNGEN

Weitere, die Erfindung verbessernde Maßnahmen werden nachstehend gemeinsam mit der Beschreibung eines bevorzugten Ausführungsbeispiels anhand der Figuren näher dargestellt. Es zeigt:
- Figur 1: eine Vorrichtung zur Qualitätsprüfung eines umgeformten thermoplastischen faserverstärkten Kunststoffbauteils,
- Figur 2: eine schematische Draufsicht auf lokale Änderungen der Oberflächenrauigkeit bezüglich der Gesamtoberfläche eines Kunststoffbauteils, und
- Figur 3: einen Querschnitt im Schnitt A-A durch den Bereich erhöhter Oberflächenrauigkeit in Figur 2.

### DETAILLIERTE BESCHREIBUBNG BEISPIELHAFTER AUSFÜHRUNGSFORMEN

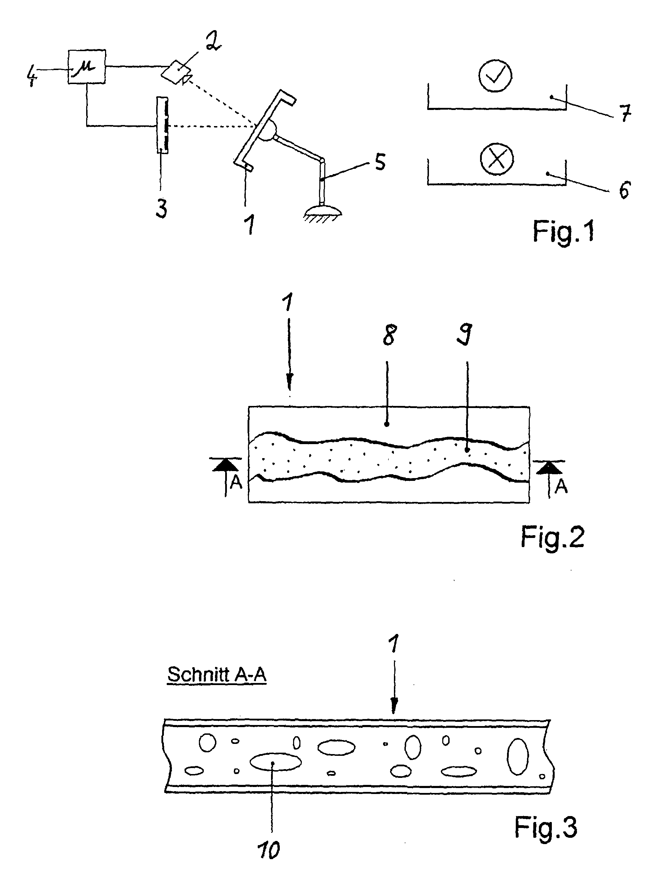

Gemäß Figur 1 besteht die Vorrichtung zur Qualitätsprüfung eines im vorangegangenen Fertigungsschritt thermoplastisch umgeformten faserverstärkten Kunststoffbauteils 1, das hier ein CFK-Bauteil ist, aus einer Sensoreinheit 2 zum optischen Prüfen des Kunststoffbauteils 1, die als eine CCD-Kamera ausgebildet ist. Benachbart neben der Sensoreinheit 2 ist ein LCD-Monitor 3 zur Erzeugung eines Streifenmusters positioniert. Der LCD-Monitor 3 emittiert das Streifenmuster derart in Richtung der Oberfläche des Kunststoffbauteils 1, dass das hiervon reflektierte Bild auf der optischen Achse der Sensoreinheit 2 liegt, also von dieser bildlich erfasst werden kann. Das reflektierte Streifenmuster beinhaltet durch Unregelmäßigkeiten Informationen über die Oberflächenrauigkeit des Kunststoffbauteils 1. Diese Bildinformation wird durch eine nachgeschaltete Auswerteeinheit 4 anhand eines Vergleichs mit einem abgespeichert hinterlegten Referenzmusters per Bildanalyse ausgewertet. Basis der Auswertung ist der Sachverhalt, dass eine erhöhte Oberflächenrauigkeit als eine erhöhte innere Werkstoffporosität interpretiert wird.

Die relative Positionierung des Kunststoffbauteils 1 zur Sensoreinheit 2 mit LCD-Monitor 3 erfolgt über eine Handhabungseinrichtung 5, welche hier als ein Industrieroboter ausgebildet ist und ansonsten dem Handling des Kunststoffbauteils 1 dient.

Wird das zu überprüfende Kunststoffbauteil in Folge des Vergleichs durch die Auswerteeinheit 4 als Schlechtteil eingestuft, so legt die Handhabungseinrichtung 5 dieses Schlechtteil in eine Ausschussbox 6 ab. Anderenfalls erfolgt eine Ablage eines Gutteils in eine Bereitstellungsbox 7.

In Figur 2 ist ein Kunststoffbauteil 1 dargestellt, welches neben einen Bereich 8 mit normaler Oberflächenrauigkeit einen Bereich 9 mit stark erhöhter Oberflächenrauigkeit aufweist. Dabei ist die Oberflächenrauigkeit des Bereichs 9 sichtbar und fühlbar. Unterhalb des Bereichs 9 befinden sich gemäß Figur 3 (Schnitt A-A) viele Poren 10, so dass eine starke innere Werkstoffporosität vorhanden ist. Bei dieser erhöhten inneren Werkstoffporosität ist die Festigkeit des Kunststoffbauteils 1 in unzulässiger Weise beeinträchtigt, so dass dieses Kunststoffbauteil 1 als Schlechtteil auszusondern ist.

### Bezugszeichenliste

| | |
|---|---|
| 1 | Kunststoffbauteil |
| 2 | Sensoreinheit |
| 3 | LCD-Monitor |
| 4 | Auswerteeinheit |
| 5 | Handhabungseinrichtung |
| 6 | Ausschussbox |
| 7 | Bereitstellungsbox |
| 8 | Bereich normaler Oberflächenrauigkeit |
| 9 | Bereich erhöhter Oberflächenrauigkeit |
| 10 | Poren |

## Patentansprüche

1. Verfahren zur Qualitätsprüfung eines umgeformten thermoplastischen faserverstärkten Kunststoffbauteils (1), das mit einer optischen Sensoreinheit (2) mit nachgeschalteter elektronischer Auswerteeinheit (4) zur Analyse des sensortechnisch erfassten Messergebnisses geprüft wird,
**dadurch gekennzeichnet, dass** durch die optische Sensoreinheit (2) die Oberflächenrauigkeit des Kunststoffbauteils (1) nach dem Umformen eingemessen wird, welche durch die Auswerteeinheit (4) anhand eines Vergleichs mit einem hinterlegten Referenzmuster derart analysiert wird, dass eine erhöhte Oberflächenrauigkeit als eine erhöhte innere Werkstoffporosität interpretiert wird.

2. Verfahren nach Anspruch 1,
**dadurch gekennzeichnet, dass** durch die optische Sensoreinheit (2) lokale Änderungen der Oberflächenrauigkeit bezüglich der Gesamtoberfläche der eingemessenen Seite des Kunststoffbauteils (1) festgestellt werden.

3. Verfahren nach Anspruch 1,
**dadurch gekennzeichnet, dass** mehrere Seiten des Kunststoffbauteil (1) optisch eingemessen werden.

4. Verfahren nach Anspruch 1,
**dadurch gekennzeichnet, dass** das hinterlegte Referenzmuster durch die optische Sensoreinheit (2) über optisches Einmessen der normalen Oberflächenrauigkeit eines Musterbauteils gewonnen wird.

5. Verfahren nach Anspruch 1,
**dadurch gekennzeichnet, dass** ein Schwellenwert für die Oberflächenrauigkeit des Kunststoffbauteils (1) definiert wird, um bei einer automatisierten Qualitätskontrolle eine Gut-Schlecht-Auswahl zu treffen.

6. Vorrichtung zur Qualitätsprüfung eines umgeformte thermoplastischen faserverstärkten Kunststoffbauteils (1) mit einer optischen Sensoreinheit (2) zum Prüfen des Kunststoffbauteils (1), welcher eine elektronische Auswerteeinheit (4) zur Analyse des sensortechnisch erfassten Messergebnisses anhand eines Mustervergleichs nachgeschaltet ist,
**dadurch gekennzeichnet, dass** die optische Sensoreinheit (2) geeignet ist die Oberflächenrauigkeit des umgeformten Kunststoffbauteils (1) ein zumessen und die Auswerteeinheit (4) geeignet ist die Oberflächenrauigkeit anhand eines Vergleichs mit einem hinterlegten Referenzmuster derart zu analysieren, dass eine erhöhte Oberflächenrauigkeit als eine erhöhte innere Werkstoffporosität interpretiert wird.

7. Vorrichtung nach Anspruch 6,
**dadurch gekennzeichnet, dass** die Sensoreinheit (2) die Oberflächenrauigkeit des Kunststoffbauteils (1) nach dem Umformen durch das Messprinzip der optischen Streifenreflexion ermittelt.

8. Vorrichtung nach Anspruch 7,
**dadurch gekennzeichnet, dass** der Sensoreinheit (2) ein LCD-Monitor (3) zur Erzeugung eines Streifenmusters zugeordnet ist.

9. Vorrichtung nach Anspruch 7,
**dadurch gekennzeichnet, dass** die Sensoreinheit (2) als eine CCD-Kamera zur Aufnahme des von der Bauteiloberfläche reflektierten Streifenmusters ausgebildet ist.

10. Vorrichtung nach Anspruch 6,
**dadurch gekennzeichnet, dass** die mindestens eine Sensoreinheit (2) ortsfest installiert ist, wogegen das zu prüfende Kunststoffbauteil (1) mittels Handhabungseinrichtung (5) bewegbar gegenüber der Sensoreinheit (2) positionierbar ist.

11. Vorrichtung nach Anspruch 6,
**dadurch gekennzeichnet, dass** das zu prüfende und durch Pressen umgeformte faserverstärkte Kunststoffbauteil (1) aus einem CFK-Werkstoff mit thermoplastischer Matrix besteht.

## Claims

1. A method for inspecting the quality of a formed thermoplastic fiber-reinforced plastic component (1) that is tested by means of an optical sensor unit (2) with a downstream electronic evaluation unit (4) for analysis of the measuring result acquired by sensor technology, **characterized in that** the surface roughness of the plastic component (1) is measured after forming by means of the optical sensor unit (2), which surface roughness is analyzed by means of the evaluation unit (4) by means of a comparison with a stored reference pattern in such a manner that increased surface roughness is interpreted as increased internal materials porosity.

2. The method of claim 1,
**characterized in that** local changes in the surface roughness relative to the overall surface of the measured face of the plastic component (1) are detected by means of the local sensor unit (2).

3. The method of claim 1,
**characterized in that** several faces of the plastic component (1) are optically measured.

4. The method of claim 1,
**characterized in that** the stored reference pattern is obtained by the optical sensor unit (2) by way of optically measuring the normal surface roughness of a sample component.

5. The method of claim 1,
**characterized in that** a threshold value relating to the surface roughness of the plastic component (1) is defined in order to make a good/bad selection during an automated quality inspection.

6. A device for inspecting the quality of a formed thermoplastic fiber-reinforced plastic component (1) by means of an optical sensor unit (2) for checking the plastic component (1) with a downstream electronic evaluation unit (4) for analysis of the measuring result acquired by sensor technology by means of sample comparison being arranged downstream of said sensor unit (2),
**characterized in that** the optical sensor unit (2) is suitable to measure the surface roughness of the transformed plastic component (1) and the evaluation unit (4) is suitable to analyze the surface roughness by means of a comparison with a stored reference pattern in such a manner that increased surface roughness is interpreted as increased internal materials porosity.

7. The device of claim 6,
**characterized in that** the sensor unit (2) determines the surface roughness of the plastic component (1) after forming by means of the measuring principle of optical strip reflection.

8. The device of claim 7,
**characterized in that** an LCD monitor (3) for generating a strip pattern is associated with the sensor unit (2).

9. The device of claim 7,
**characterized in that** the sensor unit (2) is designed as a
CCD camera for imaging the strip pattern reflected from the component surface.

10. The device of claim 6,
**characterized in that** the at least one sensor unit (2) is installed so as to be stationary, whereas by means of handling equipment (5) the plastic component (1) to be examined can be positioned so as to be movable relative to the sensor unit (2).

11. The device of claim 6,
**characterized in that** the fiber-reinforced plastic component (1) to be checked, which plastic component (1) has been formed by pressing, comprises a CFP material comprising a thermoplastic matrix.

## Revendications

1. Procédé de contrôle de qualité d'un élément en matière thermoplastique renforcé par fibres et transformé (1), lequel est contrôlé par le moyen d'une unité de détection (2) optique présentant une unité d'évaluation (4) électronique montée en aval pour analyser les résultats des mesures détectés par technique sensorielle, **caractérisé par le fait que** la rugosité de surface de l'élément en matière plastique (1) est mesurée, après la transformation, par l'unité de détection (2) optique, qui est analysée par l'unité d'évaluation (4), par comparaison avec un modèle de référence mémorisé de telle façon qu'une rugosité de surface accrue est interprétée comme une porosité interne accrue du matériau.

2. Procédé selon la revendication 1, **caractérisé par le fait que** des modifications locales de la rugosité de surface par rapport à la surface globale de la face de l'élément en matière plastique (1) mesurée sont déterminées par l'unité de détection (2) optique.

3. Procédé selon la revendication 1, **caractérisé par le fait que** plusieurs faces de l'élément en matière plastique (1) sont mesurées de manière optique.

4. Procédé selon la revendication 1, **caractérisé par le fait que** le modèle de référence mémorisé est obtenu par l'unité de détection (2) optique en mesurant de manière optique la rugosité de surface normale d'un élément modèle.

5. Procédé selon la revendication 1, **caractérisé par le fait qu'**une valeur de seuil est définie pour la rugosité de surface de l'élément en matière plastique (1) pour faire un choix « bon-mauvais » lors d'un contrôle de qualité automatisé.

6. Dispositif de contrôle de qualité d'un élément en matière thermoplastique (1) renforcé par fibres et transformé, par le moyen d'une unité de détection (2) pour contrôler l'élément en matière plastique (1), au lequel une unité d'évaluation (4) électronique est montée en aval pour analyser les résultats des mesures détectés par technique sensorielle, par comparaison avec un modèle, **caractérisé par le fait que** l'unité de détection (2) optique est susceptible de mesurer la rugosité de surface de l'élément en matière plastique (1) transformé, et l'unité d'évaluation (4) est susceptible d'analyser la rugosité de surface par comparaison avec un modèle de référence mémorisé, de telle façon qu'une rugosité de surface accrue soit interprétée comme une porosité interne accrue du matériau.

7. Dispositif selon la revendication 6, **caractérisé par le fait que** l'unité de détection (2) détermine la rugosité de surface de l'élément en matière plastique (1) après la transformation par le principe de mesure de la réflexion à bande optique.

8. Dispositif selon la revendication 7, **caractérisé par le fait qu'**un écran à cristaux liquides (3) est associé à l'unité de détection (2) pour générer un motif de bande.

9. Dispositif selon la revendication 7, **caractérisé par le fait que** l'unité de détection (2) est agencée sous la forme d'une caméra CCD pour enregistrer le modèle de bande réfléchi par la surface de l'élément.

10. Dispositif selon la revendication 6, **caractérisé par le fait que** l'au moins une unité de détection (2) est installée de manière fixe, tandis que l'élément en matière plastique (1) à contrôler peut être positionné de manière mobile par rapport à l'unité de détection (2) au moyen d'un dispositif de manutention (5).

11. Dispositif selon la revendication 6, **caractérisé par le fait que** l'élément en matière plastique (1) renforcé par fibres à contrôler et transformé par emboutissage est constitué d'un matériau PRFC à matrice thermoplastique.
